# EUROPÄISCHE PATENTANMELDUNG

(11) **EP 4 283 967 A1**
(43) Veröffentlichungstag der Anmeldung: **29.11.2023**
(21) Anmeldenummer: 22175099.5
(22) Anmeldetag: 24.05.2022

(54) **BEDIENVORRICHTUNG ZUR STEUERUNG EINES KREIS- UND SCHWENKKOPFS MIT EINER DURCH DEN KREIS- UND SCHWENKKOPF GEHALTENEN BILDERFASSUNGSEINRICHTUNG, SYSTEM ZUR INSPEKTION EINER ROHR- UND/ODER KANALLEITUNG SOWIE COMPUTERIMPLEMENTIERTES STEUERUNGSVERFAHREN ZUR STEUERUNG EINES KREIS- UND SCHWENKKOPFS**

(71) Anmelder: Rausch GmbH, 88138 Weissensberg (DE)
(72) Erfinder: PRINZ, Winfried, 88131 Lindau (DE); KURRAS, Frank Jürgen, 88138 Hergensweiler (DE)
(74) Vertreter: Müller-Boré & Partner Patentanwälte PartG mbB

(57) **Zusammenfassung**

Ein Aspekt betrifft eine Bedienvorrichtung (40) zur Steuerung eines Kreis- und Schwenkkopfs (24) mit einer durch den Kreis- und Schwenkkopf (24) gehaltenen Bilderfassungseinrichtung (26), wobei der Kreis- und Schwenkkopf (24) an einer Anordnung (20) zur Inspektion einer Rohr- und/oder Kanalleitung (10) vorgesehen ist, wobei die Bedienvorrichtung (40) aufweist:
- eine Ausgabeeinheit, die einen berührungsempfindlichen Bildausgabebereich (42) aufweist, der dazu ausgelegt ist, einem Bediener ein von der Bilderfassungseinrichtung (26) erfasstes Bild auszugeben; und
- eine Steuereinheit (46), die ausgelegt ist:
- eine berührungsbasierte Eingabe (E) des Bedieners in dem Bildausgabebereich (42) zu detektieren,
- zu bestimmen, dass die berührungsbasierte Eingabe (E) eine vorbestimmte Eingabecharakteristik aufweist,
- wenn die berührungsbasierte Eingabe (E) die vorbestimmte Eingabecharakteristik aufweist, basierend auf der berührungsbasierten Eingabe (E), einen Steuerbefehl für den Kreis- und Schwenkkopf (24) und/oder die Bilderfassungseinrichtung (26) zu bestimmen, und
- basierend auf dem Steuerbefehl, den Kreis- und Schwenkkopf (24) und/oder die Bilderfassungseinrichtung (26) zu steuern.

## Beschreibung

Die Erfindung betrifft eine Bedienvorrichtung zur Steuerung eines Kreis- und Schwenkkopfs mit einer durch den Kreis- und Schwenkkopf gehaltenen Bilderfassungseinrichtung, ein System zur Inspektion einer Rohr- und/oder Kanalleitung sowie ein computerimplementiertes Steuerungsverfahren zur Steuerung eines Kreis- und Schwenkkopfs.

Systeme zur Inspektion einer Rohr- und/oder Kanalleitung sind bekannt. Solche Systeme können eine Anordnung mit einem Gehäuse aufweisen, wobei das Gehäuse durch die zu inspizierende Rohr- und/oder Kanalleitung bewegbar ist. Beispielsweise kann die Anordnung als Fahrwagen ausgebildet sein, der durch die Rohr- und/oder Kanalleitung bewegbar ist oder die Anordnung kann als Schiebestab ausgebildet sein, der in die Rohr- und/oder Kanalleitung eingeschoben werden kann.

Ferner kann die Anordnung eine Bilderfassungseinrichtung zum Erfassen eines Bildes der Rohr- und/oder Kanalleitung aufweisen, wobei die Bilderfassungseinrichtung an dem Gehäuse angeordnet ist. Dabei kann die Bilderfassungseinrichtung starr ausgebildet sein, d.h. die Blickrichtung der Bilderfassungseinrichtung ist in Bezug auf das Gehäuse vorgegeben und unveränderlich, oder die Bilderfassungseinrichtung kann in Bezug auf das Gehäuse bewegbar sein, d.h. die Blickrichtung bzw. Ausrichtung der Bilderfassungseinrichtung ist änderbar. Bspw. kann eine bewegbare Bilderfassungseinrichtung in eine gewünschte Blickrichtung ausgerichtet bzw. bewegt werden.

Zur Steuerung der Bilderfassungseinrichtung und insbesondere zur Steuerung der Ausrichtung der Bilderfassungseinrichtung kann das System eine Bedieneinheit aufweisen, mit der die Ausrichtung der Bilderfassungseinrichtung gesteuert werden kann. Die Bedieneinheit kann beispielsweise einen Joystick aufweisen, der es einem Bediener ermöglicht, die Blickrichtung der Bilderfassungseinrichtung entsprechend einer Bewegung des Joysticks zu ändern.

Die Praxis hat gezeigt, dass solche Bedieneinheiten jedoch anfällig für Störungen und oder Beschädigungen sind. Darüber hinaus ist die Bedienung mit einem Joystick zwar intuitiv, ermöglicht aber selten eine präzise Ausrichtung der Bilderfassungseinrichtung, so dass für eine präzise Ausrichtung der Bilderfassungseinrichtung oft mehrere Joystickeingaben nötig sind.

Aufgabe der vorliegenden Erfindung ist es daher eine Bedienvorrichtung zur Steuerung eines Kreis- und Schwenkkopfs mit einer durch den Kreis- und Schwenkkopf gehaltenen Bilderfassungseinrichtung, wobei der Kreis- und Schwenkkopf an einer Anordnung zur Inspektion einer Rohr- und/oder Kanalleitung vorgesehen ist, vorzuschlagen, die eine möglichst präzise Ausrichtung der Bilderfassungseinrichtung ermöglicht. Ferner soll die Bedienvorrichtung möglichst widerstandsfähig gegenüber Verschmutzung und/oder mechanischen Einflüssen sein.

Diese Aufgabe wird durch eine Bedienvorrichtung zur Steuerung eines Kreis- und Schwenkkopfs mit einer durch den Kreis- und Schwenkkopf gehaltenen Bilderfassungseinrichtung gemäß dem unabhängigen Anspruch 1, einem System zur Inspektion einer Rohr- und/oder Kanalleitung gemäß dem unabhängigen Anspruch 12 sowie einem computerimplementierten Steuerungsverfahren zur Steuerung eines Kreis- und Schwenkkopfs gemäß dem unabhängigen Anspruch 14 gelöst. Bevorzugte Ausführungsformen ergeben sich aus den abhängigen Ansprüchen.

Ein erster Aspekt betriff eine Bedienvorrichtung zur Steuerung eines Kreis- und Schwenkkopfs mit einer durch den Kreis- und Schwenkkopf gehaltenen Bilderfassungseinrichtung, wobei der Kreis- und Schwenkkopf an einer Anordnung zur Inspektion einer Rohr- und/oder Kanalleitung vorgesehen ist. Vorzugsweise ermöglicht der Kreis- und Schwenkkopf, dass die Ausrichtung bzw. Blickrichtung der Bilderfassungseinrichtung verändert werden kann. Die Anordnung kann vorzugsweise ein Gehäuse aufweisen, welches in die zu inspizierende Rohr- und/oder Kanalleitung eingeführt werden kann und durch die Rohr -und/oder Kanalleitung bewegt werden kann. Die Anordnung kann beispielsweise als Fahrwagen ausgebildet sein, der über einen Antrieb verfügt mittels dem der Fahrwagen durch die Rohr- und/oder Kanalleitung bewegbar ist. Alternativ kann die Anordnung als Schiebestab ausgebildet sein, der durch die Rohr- und/oder Kanalleitung geschoben werden kann.

Der Kreis- und Schwenkkopf kann vorzugsweise an dem Gehäuse angeordnet sein und insbesondere lösbar mit dem Gehäuse verbindbar sein. Beispielsweise kann der Kreis- und Schwenkkopf mittels einer Kupplung mit dem Gehäuse verbindbar sein, wobei die Kupplung ein schnelles Wechseln des Kreis- und Schwenkkopfs ermöglicht.

Des Weiteren kann der Kreis- und Schwenkkopf einen ersten Abschnitt aufweisen, der drehbar an dem Gehäuse angeordnet und/oder mit dem Gehäuse verbindbar ist. Insbesondere kann der erste Abschnitt um eine erste Achse drehen und/oder rotieren. Hierzu kann die Anordnung einen Antrieb aufweisen, mittels dem der erste Abschnitt um die erste Achse gedreht und/oder rotiert werden kann. Ferner kann die Bilderfassungseinrichtung verschwenkbar an dem ersten Abschnitt angeordnet sein, wobei die Bilderfassungseinrichtung vorzugsweise um eine zweite Achse drehbar bzw. rotierbar ist. Vorzugsweise verlaufen die erste Achse und die zweite Achse im Wesentlichen senkrecht zueinander und können insbesondere einen gemeinsamen Schnittpunkt aufweisen. Ferner kann durch Drehen oder Rotieren des ersten Abschnitts um die erste Achse, sich die Lage der zweiten Achse entsprechend der Rotation verändern, da diese entsprechend der Rotation mit rotiert wird. Durch eine entsprechende Ansteuerung des Kreis- und Schwenkkopfs, die eine Kreis- und/oder Schwenkbewegung des Kreis- und Schwenkkopfs bewirket, kann somit die Blickrichtung der Bilderfassungseinrichtung geändert werden.

Die Bilderfassungseinrichtung kann insbesondere als eine Kameraeinheit ausgebildet sein, die ein lichtempfindliches elektronisches Bauteilelement aufweist, welches dazu ausgelegt ist, ein zweidimensionales (2D) oder dreidimensionales (3D) Bild zu erfassen. Das von der Bilderfassungseinrichtung erfasste Bild, kann an die Bedienvorrichtung übertragen werden.

Die Bedienvorrichtung weist eine Ausgabeeinheit auf, die einen berührungsempfindlichen Bildausgabebereich aufweist. Der Bildausgabebereich ist dazu ausgelegt, einem Bediener das von der Bilderfassungseinrichtung erfasste Bild auszugeben. Bevorzugt wird das von der Bilderfassungseinrichtung erfasste Bild als Video angezeigt und insbesondere digital von der Anordnung zu der Bedieneinheit übertragen. Alternativ kann das Bild oder Video auch analog von der Anordnung zu der Bedieneinheit übertragen werden, beispielsweise kann die Übertragung im NTSC- oder PAL-Format erfolgen.

Die Ausgabeeinheit und/oder der Bildausgabebereich kann insbesondere als Bildschirm ausgebildet sein, beispielsweise als TFT-Bildschirm, wobei der Bildausgabebereich aufgrund der berührungsempfindlichen Ausgestaltung Berührungen des Bedieners detektieren kann.

Des Weiteren weist die Bedieneinheit eine Steuereinheit auf, die dazu ausgelegt ist, eine berührungsbasierte Eingabe des Bedieners in dem Bildausgabebereich zu detektieren. Als berührungsbasierte Eingabe kann dabei eine Eingabe des Bedieners verstanden werden, die durch Berührung des Bildausgabebereichs erfolgt. Beispielsweise kann der Bediener eine Eingabe mit einem oder mehrere Finger vornehmen, oder mit einem Hilfsmittel wie einem Stylus und/oder einem Stift vornehmen.

Des Weiteren ist die Steuereinheit dazu ausgelegt, zu bestimmen, dass die berührungsbasierte Eingabe eine vorbestimmte Eingabecharakteristik aufweist. Unter Eingabecharakteristik kann dabei verstanden werden, dass die berührungsbasierte Eingabe ein vorbestimmtes Muster aufweist. Ferner ist die Steuereinheit dazu ausgebildet, basierend auf der berührungsbasierten Eingabe, einen Steuerbefehl für den Kreis- und Schwenkkopf und/oder die Bilderfassungseinrichtung zu bestimmen, wenn die berührungsbasierte Eingabe die vorbestimmte Eingabecharakteristik aufweist. Basierend auf dem Steuerbefehl steuert die Steuereinheit den Kreis- und Schwenkkopf und/oder die Bilderfassungseinrichtung. Vorteilhafterweise kann somit der Kreis- und Schwenkkopf ohne eine mechanische Betätigungseinrichtung gesteuert werden. Ferner kann anhand der Eingabecharakteristik eine gezielte Ausrichtung des Kreis- und Schwenkkopfs erfolgen.

Der Steuerbefehl kann insbesondere eine Ausrichtungsanweisung aufweisen, die eine Anweisung zum Ausrichten des Kreis -und Schwenkkopfs vorgibt. Beispielsweise kann die Ausrichtungsanweisung eine Gradangabe aufweisen, die angibt um wie viel Grad der Kreis- und Schwenkkopf gedreht wird oder auf welche Position der Kreis -und Schwenkkopf gedreht werden soll. Die Ausrichtungsanweisung kann dabei eine erste Ausrichtungsangabe aufweisen, die eine Angabe zur Steuerung einer, bevorzug ausschließlichen, Kreisbewegung des Kreis -und Schwenkkopfs festlegt und eine zweite Ausrichtungsangabe, die eine Angabe zur Steuerung einer, bevorzug ausschließlichen, Schwenkbewegung des Kreis -und Schwenkkopfs festlegt. Mit anderen Worten, die Angaben zum Kreisen und Schwenken des Kreis- und Schwenkkopfs können jeweils mit getrennten Angaben festgelegt werden.

Des Weiteren kann die Steuereinheit dazu ausgebildet sein, die berührungsbasierte Eingabe mit einem oder mehreren bestimmten in der Steuereinheit hinterlegten bzw. gespeicherten Mustern zu vergleichen, um einen entsprechenden Steuerbefehl zu bestimmen.

Vorzugsweise kann die berührungsbasierte Eingabe in einem Teilbereich des Bildausgabebereichs erfolgen, in dem kein durch den Bediener zu betätigendes Bedienelement dargestellt ist oder die berührungsbasierte Eingabe betätigt kein in dem Bildausgabebereich dargestelltes Betätigungselement. Vorteilhafterweise kann somit der Kreis- Schwenkkopf allein durch die Eingabecharakteristik der berührungsbasierten Eingabe gesteuert werden. Die berührungsbasierte Eingabe soll insbesondere kein auf dem Bildbereich dargestelltes Betätigungselement betätigen. Unter betätigen kann dabei verstanden werden, dass durch die berührungsbasierte Eingabe ein mit dem Betätigungselement assoziierter Betätigungsbefehl nicht ausgelöst wird. Mit anderen Worten, die berührungsbasierte Eingabe kann durchaus ein dargestelltes Betätigungselement, beispielsweise eine Schaltfläche, berühren, wobei das Berühren des Betätigungselements den mit dem Betätigungselement assoziierten Betätigungsbefehls nicht auslöst.

Vorzugsweise kann die vorbestimmte Eingabecharakteristik die berührungsbasierte Eingabe dahingehend charakterisieren, dass die berührungsbasierte Eingabe eine von einem zentralen Bereich des Bildausgabebereichs ausgehende Eingabe ist und/oder die berührungsbasierte Eingabe dahingehend charakterisieren, dass die berührungsbasierte Eingabe eine zu dem zentralen Bereich des Bildausgabebereichs führende Eingabe ist.

Als zentraler Bereich kann insbesondere ein Ausschnitt des Bildausgabebereichs verstanden werden. Der Bildausgabebereich kann beispielsweise eine erste Länge in einer ersten Richtung aufweisen und eine zweite Länge in einer zweiten Richtung aufweisen, wobei die erste Richtung und die zweite Richtung senkrecht zueinander verlaufen. Beispielsweise kann der Bildausgabebereich ein rechteckiger Bildausgabebereich sein. Vorzugsweise kann der zentrale Bereich ein rechteckiger Ausschnitt in dem Bildausgabebereich sein, wobei der Mittelpunkt des Bildausgabebereichs und der Mittelpunkt des zentralen Bereichs bevorzugt aufeinanderliegen können. Die Länge des zentralen Bereichs in der ersten Richtung beträgt vorzugsweise zwischen 5 % und 35 % und insbesondere zwischen 10 % und 30 % der Länge des Bildausgabebereich in der ersten Richtung und die Länge des zentralen Bereichs in der zweiten Richtung beträgt vorzugsweise zwischen 5% und 35% und insbesondere zwischen 10% und 30% der Länge des Bildausgabebereichs in der zweiten Richtung. Entsprechende Seiten des zentralen Bereichs können parallel zu entsprechenden Seiten des Bildausgabebereichs verlaufen.

Vorzugsweise kann die von dem zentralen Bereich des Bildausgabebereichs ausgehende Eingabe dadurch gekennzeichnet sein, dass zu Beginn der berührungsbasierten Eingabe, ein Berührungspunkt innerhalb des zentralen Bereichs liegt und der Berührungspunkt während der berührungsbasierten Eingabe vorzugsweise mit einer im Wesentlichen geradlinigen und bevorzugt ununterbrochenen Bewegung um eine Bewegungsdistanz aus dem zentralen Bereich bewegt wird. Der Berührungspunkt liegt somit am Ende der berührungsbasierten Eingabe außerhalb des zentralen Bereichs. Die berührungsbasierte Eingabe kann insbesondere durch Bewegen eines Fingers des Bedieners auf dem Bildausgabebereich erfolgen. Dabei kann der Bediener die berührungsbasierte Eingabe durch Berühren des Bildausgabebereichs innerhalb des zentralen Bereichs beginnen, den Finger anschließend auf dem Bildausgabebereich nach außerhalb des zentralen Bereichs bewegen und anschließend den Finger von dem Bildausgabebereich entfernen bzw. lösen, um die berührungsbasierte Eingabe zu beenden. Die Stelle bzw. Position, an der der Finger den Bildausgabebereich berührt, kann dabei durch die Steuereinheit als Berührungspunkt detektiert werden.

Unter einer im Wesentlichen geradlinigen Bewegung kann insbesondere auch eine Bewegung verstanden, die von einer geradlinigen Verbindung zwischen dem Berührungspunkt zu Beginn der berührungsbasierten Eingabe und dem Berührungspunkt zum Ende der berührungsbasierten Eingabe geringfügig abweicht. Die Abweichung von der geradlinigen Verbindung kann bis zu 15% der ersten Länge und/oder der zweiten Länge des Bildausgabebereichs betragen. Vorteilhafterweise wird somit ermöglicht, dass auch berührungsbasierte Eingaben, die nicht exakt geradlinig durchgeführt werden, eine gewünschte Steuerung des Kreis -und Schwenkkopfs bewirken. Als Bewegungsdistanz kann ferner die Strecke zwischen dem Berührungspunkt zu Beginn der berührungsbasierten Eingabe und dem Berührungspunkt zum Ende der berührungsbasierten Eingabe verstanden werden.

Vorzugsweise kann die Steuereinheit dazu ausgebildet sein, eine Geschwindigkeitsanweisung des Steuerbefehls, die eine Geschwindigkeit zum Durchführen einer Kreis- und/oder Schwenkbewegung des Kreis- und Schwenkkopfs vorgibt, basierend auf der Bewegungsdistanz zu bestimmen und/oder eine Ausrichtungsanweisung des Steuerbefehls, die eine Anweisung zum Ausrichten des Kreis- und Schwenkkopfs vorgibt, basierend auf einer Bewegungsrichtung des Berührungspunkts zu bestimmen. Vorteilhafterweise kann somit eine präzise Ausrichtung der Bilderfassungseinrichtung realisiert werden Insbesondere bewirkt eine kleine Bewegungsdistanz eine erste (geringe) Geschwindigkeit, mit der die Kreis- und/oder Schwenkbewegung durchgeführt wird, und eine größere Bewegungsdistanz als die kleine Bewegungsdistanz bewirkt eine höhere Geschwindigkeit als bei der kleinen Bewegungsdistanz. Alternativ kann die Geschwindigkeit bei einer kleinen Bewegungsdistanz höher sein als bei einer größeren Bewegungsdistanz. Beispielsweise kann die Geschwindigkeit basierend auf dem Produkt der Bewegungsdistanz mit einem festgelegten Faktor oder durch einen von dem Bediener festlegbaren Faktor berechnet werden.

Die Steuereinheit kann die Bewegungsrichtung des Berührungspunkts insbesondere dadurch ermitteln, in dem eine Richtung vom Mittelpunkt des zentralen Bereiches zu dem Berührungspunkt zum Ende der berührungsbasierten Eingabe berechnet wird. Aus der Bewegungsrichtung kann die Steuereinheit eine entsprechende Ausrichtungsanweisung zum Ausrichten des Kreis- und Schwenkkopfs bzw. der Bilderfassungseinrichtung bestimmen. Entsprechend kann der Kreis- Schwenkkopf und/oder die Bilderfassungseinrichtung entsprechend der Ausrichtungsanweisung und/oder der Geschwindigkeit ausgerichtet werden. Die Ausrichtungsanweisung und/oder die Geschwindigkeit können insbesondere Bestandteil des Steuerbefehls sein, den die Steuereinheit an den Kreis- und Schwenkkopf sendet bzw. übermittelt. Die Ausrichtung des Kreis- und Schwenkkopfs kann dabei bis zu einer vorgebbaren Endposition erfolgen. Ferner kann durch eine weitere berührungsbasierte Eingabe des Bildausgabebereichs während des Ausrichtens des Kreis- und Schwenkkopfs, beispielsweise eine Berührung des Bedieners innerhalb des zentralen Bereichs oder einer Schaltfläche die in dem Bildausgabebereich eingeblendet wird, die Steuereinheit das Ausrichten des Kreis- und Schwenkkopfs stoppen.

Vorzugsweise kann die zu dem zentralen Bereich des Bildausgabebereichs führende Eingabe dadurch gekennzeichnet sein, dass zu Beginn der berührungsbasierten Eingabe, ein Berührungspunkt außerhalb des zentralen Bereichs liegt und der Berührungspunkt durch die berührungsbasierte Eingabe bevorzugt ununterbrochen in den zentralen Bereich bewegt wird. Mit anderen Worten, die berührungsbasierte Eingabe beginnt außerhalb des zentralen Bereichs und endet innerhalb des zentralen Bereichs. Des Weiteren kann die berührungsbasierte Eingabe im Wesentlichen geradlinig ausgeführt sein, wobei eine Abweichung, wie bereits zuvor beschrieben, möglich sein kann.

Vorzugsweise kann die Steuereinheit dazu ausgebildet sein, für die zu dem zentralen Bereich des Bildausgabebereichs führende Eingabe, eine Ausrichtungsanweisung des Steuerbefehls, die eine Anweisung zum Ausrichten des Kreis- und Schwenkkopfs vorgibt, basierend auf dem Berührungspunkt zu Beginn der berührungsbasierten Eingabe zu bestimmen. Insbesondere kann die Ausrichtungsanweisung eine Ausrichtung des Kreis- und Schwenkkopfs auf den Bildausschnitt bewirken, der mit dem Berührungspunkt zu Beginn der berührungsbasierten Eingabe assoziiert ist. Mit anderen Worten, bei der die zu dem zentralen Bereich des Bildausgabebereichs führenden Eingabe erfolgt eine Ausrichtung der Bilderfassungseinrichtung auf den Bildausschnitt, der mit dem Berührungspunkt zu Beginn der berührungsbasierten Eingabe assoziiert ist. Durch die Kreis- und/oder Schwenkbewegung erfolgt somit eine Ausrichtung der Bilderfassungseinrichtung derart, dass der Bildausschnitt, der mit dem Berührungspunkt zu Beginn der berührungsbasierten Eingabe assoziiert ist, in dem Bildausgabebereich zentriert dargestellt wird.

Vorzugsweise kann die Steuereinheit dazu ausgelegt sein, für die zu dem zentralen Bereich des Bildausgabebereichs führende Eingabe, die Ausrichtungsanweisung basierend auf mindestens einem von einem Blick- bzw. Bildwinkel der Bilderfassungseinrichtung, einer Zoomeinstellung der Bilderfassungseinrichtung und einer Positionierung des Bildausschnitts in Bezug auf den Bildausgabebereich zu bestimmen. Insbesondere kann die Steuereinheit dazu ausgebildet sein, den Blick- bzw. Bildwinkel der Bilderfassungseinrichtung zu bestimmen. Zur Bestimmung des Blick- bzw. Bildwinkels kann die Steuereinheit den Typ der Bilderfassungseinrichtung bestimmen und basierend auf dem Typ der Bilderfassungseinrichtung den Blickwinkel der Bilderfassungseinrichtung bestimmen. Vorzugsweise können ein oder mehrere Typen von Bilderfassungseinrichtungen mit zugeordneten Blick- bzw. Bildwinkeln in der Steuereinheit gespeichert sein, und die Steuereinheit kann die Bilderfassungseinrichtung nach deren Typ abfragen, um diesen zu bestimmen. Anhand der gespeicherten Zuordnung zwischen Typ und Blick- bzw. Bildwinkel der Bilderfassungseinrichtung, kann dann die Steuereinheit den für die Berechnung der Ausrichtungsanweisung notwendigen Blick- bzw. Bildwinkel bestimmen. Alternativ kann die Steuereinheit den Blick- bzw. Bildwinkel direkt von der Bilderfassungseinrichtung abfragen. Als Blick- bzw. Bildwinkel kann der Gegenstandsraum bezeichnet werden, der durch die Ränder des Aufnahmeformats der Bilderfassungseinrichtung begrenzt wird.

Vorzugsweise kann die vorbestimmte Eingabecharakteristik die berührungsbasierte Eingabe dahingehend charakterisieren, dass ein Berührungspunkt im Wesentlichen zumindest abschnittsweise eine Kreisbewegung erfährt und der Steuerbefehl eine Anweisung für eine vordefinierte Kreis und/oder Schwenkbewegung des Kreis- und Schwenkkopfs enthält. Unter einer abschnittsweisen Kreisbewegung kann insbesondere eine Kreisbewegung verstanden werden, die mindestens 90°, bevorzugt mindestens 180° und insbesondere mindestens 270° eines Kreises darstellt. Die vordefinierte Kreis- und/oder Schwenkbewegung kann insbesondere ein 360° Kreisbewegung des Kreis- und Schwenkkopfs darstellen, bei der die Bilderfassungseinrichtung unter 90° von der ersten Achse wegblickt.

Des Weiteren kann die vorbestimmte Eingabecharakteristik die berührungsbasierte Eingabe dahingehend charakterisieren, dass zwei Berührungspunkte voneinander weg oder zueinander bewegt werden und der Steuerbefehl eine Zoomanweisung für die Bilderfassungseinrichtung enthält. Insbesondere können die zwei Berührungspunkte gleichzeitig voneinander weg oder aufeinander zu bewegt. Anhand der berührungsbasierten Eingabe kann ein Weg- oder Heranzoomen der Bilderfassungseinrichtung gesteuert werden. Ferner kann das Maß des Weg- oder Heranzoomens basierend auf der Strecke, um die sich die zwei Berührungspunkte voneinander weg oder aufeinander zu bewegen, gesteuert werden.

Ferner kann die vorbestimmte Eingabecharakteristik die berührungsbasierte Eingabe dahingehend charakterisieren, dass zwei Berührungspunkte eine gerichtete Drehbewegung erfahren und der Steuerbefehl eine der gerichteten Drehbewegung entsprechende Anweisung zum Kreisen des Kreis- und Schwenkkopfs enthält. Insbesondere kann die Anweisung lediglich eine Richtungsanweisung zum Kreisen des Kreis -und Schwenkkopfs beinhalten, die der gerichteten Drehbewegung entspricht.

Ein zweiter Aspekt betrifft ein System zur Inspektion einer Rohr- und/oder Kanalleitung. Das System weist eine Anordnung mit einem Gehäuse auf, wobei an dem Gehäuse eine von einem Kreis- und Schwenkkopf gehaltene Bilderfassungseinrichtung vorgesehen ist. Die Anordnung ist durch die Rohr- und/oder Kanalleitung bewegbar. Ferner weist das System eine mit dem Gehäuse kommunikativ verbindbare Bedienvorrichtung gemäß dem ersten Aspekt auf. Das System kann ferner gemäß den Ausführungen des ersten Aspekts ausgebildet sein. Es kann insbesondere vorgesehen sein, dass die Bedienvorrichtung außerhalb der Rohr- und/oder Kanalleitung verbleibt.

Insbesondere können das Gehäuse und die Bedienvorrichtung mittels einer elektrischen Verbindung und/oder über eine Luftschnittstelle kommunikativ miteinander verbunden sein, wobei über die elektrische Verbindung und/oder die Luftschnittstelle das von der Bilderfassungseinrichtung erfasste Bild und/oder der Steuerbefehl übertragen werden können. Die Luftschnittstelle kann insbesondere als Wireless LAN (WLAN)- oder Mobilfunkschnittstelle realisiert sein.

Ein dritter Aspekt betrifft ein computerimplementiertes Steuerungsverfahren zur Steuerung eines Kreis- und Schwenkkopfs mit einer durch den Kreis- und Schwenkkopf gehaltenen Bilderfassungseinrichtung, wobei der Kreis- und Schwenkkopf an einer Anordnung zur Inspektion einer Rohr- und/oder Kanalleitung vorgesehen ist, wobei das Verfahren die folgenden Schritte aufweist:
- Ausgeben eines von der Bilderfassungseinrichtung erfassten Bildes auf einem berührungsempfindlichen Bildausgabebereich einer Ausgabeeinheit,
- Detektieren einer berührungsbasierten Eingabe eines Bedieners in dem Bildausgabebereich,
- Bestimmen, dass die berührungsbasierte Eingabe eine vorbestimmte Eingabecharakteristik aufweist,
- wenn die berührungsbasierte Eingabe die vorbestimmte Eingabecharakteristik aufweist, Bestimmen eines Steuerbefehls für den Kreis- und Schwenkkopf und/oder für die Bilderfassungseinrichtung basierend auf der berührungsbasierten Eingabe, und
- Steuern des Kreis- und Schwenkkopfs und/oder der Bilderfassungseinrichtung basierend auf dem Steuerbefehl.

Des Weiteren kann das Verfahren insbesondere Schritte und Merkmale aufweisen, die zuvor in Zusammenhang mit dem ersten und zweiten Aspekt und insbesondere der Steuereinheit beschrieben wurden.

Diese und andere Aufgaben, Merkmale und Vorteile der vorliegenden Erfindung werden aus dem Studium der folgenden detaillierten Beschreibung bevorzugter Ausführungsformen und der beiliegenden Figuren deutlicher. Es ist ersichtlich, dass, obwohl Ausführungsformen separat beschrieben werden, einzelne Merkmale daraus zu zusätzlichen Ausführungsformen kombiniert werden können.

Es zeigen:
- Figur 1: eine schematische Darstellung eines Systems zur Inspektion einer Rohr- und/oder Kanalleitung,
- Figur 2: eine erste Darstellung einer Bedieneinheit des Systems zur Inspektion einer Rohr- und/oder Kanalleitung,
- Figur 3: eine zweite Darstellung der Bedieneinheit des Systems zur Inspektion einer Rohr- und/oder Kanalleitung,
- Figur 4: eine dritte Darstellung der Bedieneinheit des Systems zur Inspektion einer Rohr- und/oder Kanalleitung,
- Figur 5: eine vierte Darstellung der Bedieneinheit des Systems zur Inspektion einer Rohr- und/oder Kanalleitung,
- Figur 6: eine fünfte Darstellung der Bedieneinheit des Systems zur Inspektion einer Rohr- und/oder Kanalleitung, und
- Figur 7: eine Konfiguration der Bedieneinheit.

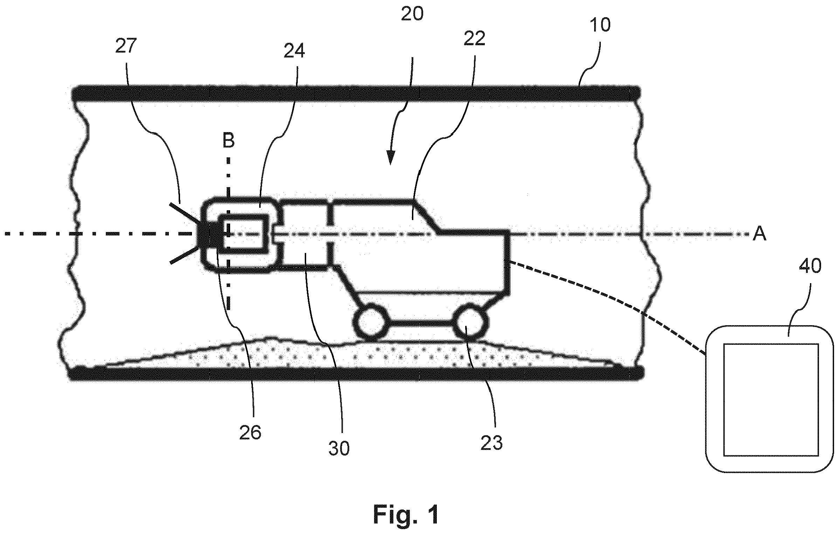

Figur 1 zeigt schematisch ein System zur Inspektion einer Rohr- und/oder Kanalleitung 10. Das System weist eine Anordnung 20 auf, welche in die Rohr- und/oder Kanalleitung 10 eingebracht werden kann und durch die Rohr- und/oder Kanalleitung 10 bewegt werden kann. Des Weiteren weist das System eine Bedieneinheit 40 auf, die für gewöhnlich außerhalb der Rohr- und/oder Kanalleitung 10 verbleibt, wobei es die Bedieneinheit 40 einem Bediener ermöglicht, die Anordnung 20 zu bedienen.

Die Anordnung 20 weist ein Gehäuse 22 auf, welches durch die Rohr- und/oder Kanalleitung 10 bewegt werden kann. Wie in Figur 1 dargestellt, kann die Anordnung 20 als Fahrwagen, der über einen Antrieb 23 verfügt, ausgebildet sein. Alternativ kann die Anordnung 20 auch als Schiebestab ausgebildet sein, der in die Rohr- und/oder Kanalleitung 10 geschoben werden kann.

Ferner weist die Anordnung 20 einen Kreis- und Schwenkkopf 24 auf, der mit dem Gehäuse 22 verbunden ist und bevorzugt lösbar mit dem Gehäuse 22 verbindbar ist. Vorteilhafterweise kann somit der Kreis- und Schwenkkopf 24 der Anordnung 20 ausgetauscht werden.

Ferner weist die Anordnung 20 eine Bilderfassungseinrichtung 26 auf. Die Bilderfassungseinrichtung 26 ist durch einen Blick- bzw. Bildwinkel 27 charakterisiert, gemäß dem die Bilderfassungseinrichtung 26 ein Bild erfasst kann. Das Bild kann vorzugsweise digital von der Anordnung 20 an die Bedieneinheit 40 übertragen werden, wo das Bild einem Bediener angezeigt werden kann. Die Bilderfassungseinrichtung 26 kann insbesondere als eine Kameraeinheit ausgebildet sein, die ein lichtempfindliches elektronisches Bauteilelement aufweist, welches dazu ausgelegt ist, ein zweidimensionales (2D) oder dreidimensionales (3D) Bild zu erfassen.

Die Bilderfassungseinrichtung 26 kann derart mit dem Kreis- und Schwenkkopf 24 verbunden sein, dass eine Kreis- und/oder Schwenkbewegung des Kreis- und Schwenkkopfs 24 eine Änderung der Blickrichtung der Bilderfassungseinrichtung 26 bewirkt. Insbesondere kann der Kreis- und Schwenkkopf 24 einen ersten Abschnitt 30 aufweisen, der um eine erste Achse A drehbar bzw. rotierbar an dem Gehäuse 22 gehalten wird. Des Weiteren kann die Bilderfassungseinrichtung 26 um eine zweite Achse B verschwenkbar an dem ersten Abschnitt 30 angeordnet sein. Vorzugsweise verlaufen die erste Achse A und die zweite Achse B im Wesentlichen senkrecht zueinander. Ferner können die erste Achse A und die zweite Achse B einen imaginären Schnittpunkt aufweisen. Beim Kreisen bzw. Rotieren des ersten Gehäuseabschnitts 22 um die erste Achse A erfolgt ein entsprechendes Rotieren der Achse B.

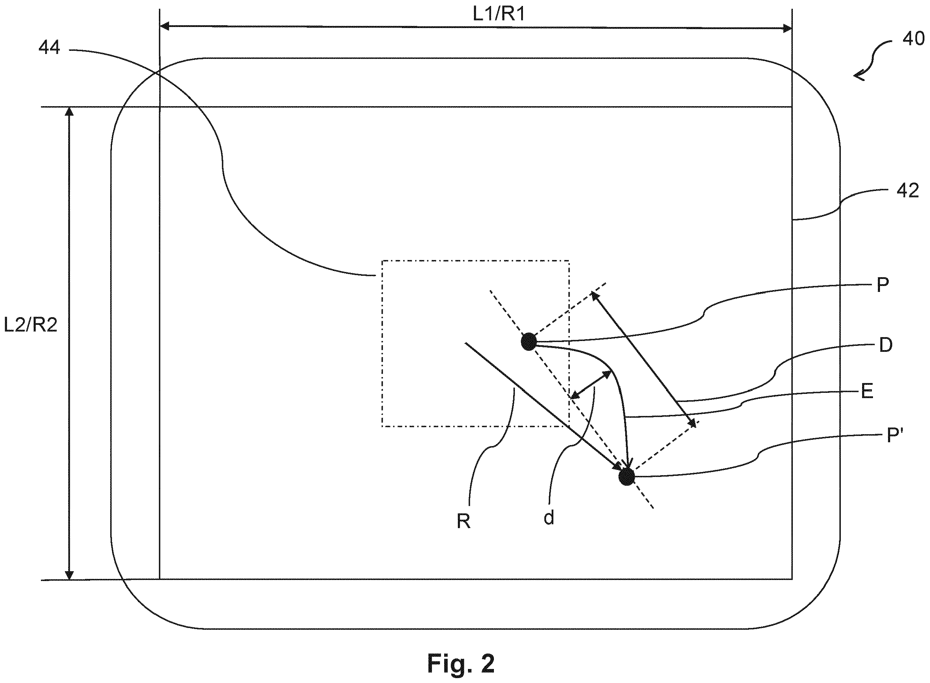

Eine Kreis- und Schwenkbewegung des Kreis- und Schwenkkopfs 24 kann insbesondere durch die Bedieneinheit 40 gesteuert werden. Die Bedieneinheit 40 wird im Folgenden näher unter Bezugnahme der Figuren 2 bis 7 näher beschrieben. Die Bedieneinheit 40 weist einen Bildausgabebereich 42 auf, der berührungsempfindlichen ist. Die Bedieneinheit ist dazu ausgebildet, dass von der Bilderfassungseinrichtung 26 erfasste Bild einem Bediener mittels dem Bildausgabebereich 42 auszugeben bzw. anzuzeigen. Die Bedieneinheit 40 bzw. der Bildausgabebereich 42 kann als Bildschirm, beispielsweise als TFT-Bildschirm, der berührungsempfindlichen ist, ausgebildet sein. Der Bildausgabebereich 42 kann beispielsweise eine erste Länge L1 in einer ersten Richtung R1 aufweisen und eine zweite Länge L2 in einer zweiten Richtung R2 aufweisen, wobei die erste Richtung R1 und die zweite Richtung R2 senkrecht zueinander verlaufen. Beispielsweise kann der Bildausgabebereich 42 ein rechteckiger Bildausgabebereich 42 sein.

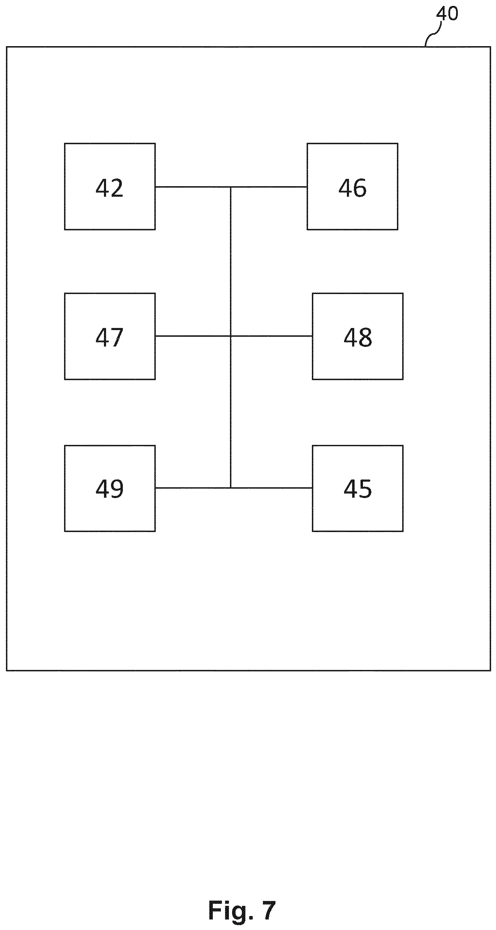

Die Bedieneinheit 40 kann ferner eine Steuereinheit 46 (siehe Figur 7) aufweisen, die eine berührungsbasierte Eingabe E eines Bedieners in dem Bildausgabebereich 42 detektiert. Die berührungsbasierte Eingabe E kann beispielsweise mittels eines oder mehrerer Finger des Bedieners oder mittels eines Hilfsmittels, wie einem Stift oder einem Stylus, erfolgen. Ferner kann die Steuereinheit 46 bestimmen, ob die berührungsbasierte Eingabe E eine vorbestimmte Eingabecharakteristik aufweist. Wenn die berührungsbasierte Eingabe E die vorbestimmte Eingabecharakteristik aufweist, kann die Steuereinheit 46, basierend auf der berührungsbasierten Eingabe E, einen Steuerbefehl für den Kreis- und Schwenkkopf 24 und/oder die Bilderfassungseinrichtung 26 bestimmen und basierend auf dem Steuerbefehl, den Kreis- und Schwenkkopf 24 und/oder die Bilderfassungseinrichtung 26 steuern.

Die vorbestimmte Eingabecharakteristik kann die berührungsbasierte Eingabe E dahingehend charakterisieren, ob diese eine von einem zentralen Bereich 44 des Bildausgabebereichs 42 ausgehende Eingabe ist und/oder einer zu dem zentralen Bereich 44 des Bildausgabebereichs 42 führende Eingabe ist. Als zentraler Bereich 44 kann insbesondere ein Ausschnitt des Bildausgabebereichs 42 verstanden werden. Vorzugsweise kann der zentrale Bereich 44 ein rechteckiger Ausschnitt in dem Bildausgabebereich 42 sein, wobei der Mittelpunkt des Bildausgabebereichs 42 und der Mittelpunkt des zentralen Bereichs 44 bevorzugt aufeinanderliegen können. Die Länge des zentralen Bereichs 44 in der ersten Richtung R1 beträgt vorzugsweise zwischen 5 % und 35 % und insbesondere zwischen 10 % und 30 % der Länge L1 des Bildausgabebereich 42 in der ersten Richtung R1 und die Länge des zentralen Bereichs 44 in der zweiten Richtung R2 beträgt vorzugsweise zwischen 5% und 35% und insbesondere zwischen 10% und 30 % der Länge L2 des Bildausgabebereichs 42 in der zweiten Richtung R2. Entsprechende Seiten des zentralen Bereichs 44 können parallel zu entsprechenden Seiten des Bildausgabebereichs 42 verlaufen.

Im Folgenden wird bezugnehmend auf Figur 2 die Steuerung des Kreis- und Schwenkkopfs 24 mittels einer berührungsbasierten Eingabe E, die von dem zentralen Bereich 44 des Bildausgabebereichs 42 ausgehend ist, beschrieben. Die von dem zentralen Bereich 44 des Bildausgabebereichs 42 ausgehende Eingabe E ist dadurch gekennzeichnet sein, dass zu Beginn der berührungsbasierten Eingabe E, ein Berührungspunkt P innerhalb des zentralen Bereichs 44 liegt und der Berührungspunkt P während der berührungsbasierten Eingabe E vorzugsweise mit einer im Wesentlichen geradlinigen und bevorzugt ununterbrochenen Bewegung um eine Bewegungsdistanz D aus dem zentralen Bereich 44 bewegt wird. Der Berührungspunkt P' liegt somit am Ende der berührungsbasierten Eingabe E außerhalb des zentralen Bereichs 44. Die berührungsbasierte Eingabe E kann insbesondere durch Bewegen eines Fingers des Bedieners auf dem Bildausgabebereich 42 erfolgen. Dabei kann der Bediener die berührungsbasierte Eingabe E durch Berühren des Bildausgabebereichs 42 innerhalb des zentralen Bereichs 44 beginnen, den Finger anschließend auf dem Bildausgabebereich 44 nach außerhalb des zentralen Bereichs 42 bewegen und anschließend den Finger von dem Bildausgabebereich 44 entfernen bzw. lösen, um die berührungsbasierte Eingabe E zu beenden. Die Stelle bzw. Position, an der der Finger den Bildausgabebereich 42 berührt, kann dabei durch die Steuereinheit 46 als Berührungspunkt P detektiert werden.

Unter einer im Wesentlichen geradlinigen Bewegung kann insbesondere auch eine Bewegung verstanden, die von einer geradlinigen Verbindung zwischen dem Berührungspunkt P zu Beginn der berührungsbasierten Eingabe E und dem Berührungspunkt P' zum Ende der berührungsbasierten Eingabe E geringfügig abweicht. Die Abweichung d von der geradlinigen Verbindung kann bis zu 15% der ersten Länge L1 und/oder der zweiten Länge L2 des Bildausgabebereichs 42 betragen. Vorteilhafterweise wird somit ermöglicht, dass auch berührungsbasierte Eingaben E, die nicht exakt geradlinig durchgeführt werden, eine gewünschte Steuerung des Kreis -und Schwenkkopfs 24 bewirken. Als Bewegungsdistanz D kann ferner die Strecke zwischen dem Berührungspunkt P zu Beginn der berührungsbasierten Eingabe E und dem Berührungspunkt P' zum Ende der berührungsbasierten Eingabe E verstanden werden.

Vorzugsweise kann die Steuereinheit 46 dazu ausgebildet sein, eine Geschwindigkeitsanweisung des Steuerbefehls, die eine Geschwindigkeit zum Durchführen einer Kreis- und/oder Schwenkbewegung des Kreis- und Schwenkkopfs 24 vorgibt, basierend auf der Bewegungsdistanz D zu bestimmen und/oder eine Ausrichtungsanweisung des Steuerbefehls, die eine Anweisung zum Ausrichten des Kreis- und Schwenkkopfs vorgibt, basierend auf einer Bewegungsrichtung R des Berührungspunkts P zu bestimmen. Vorteilhafterweise kann somit eine präzise Ausrichtung der Bilderfassungseinrichtung 26 realisiert werden.

Insbesondere bewirkt eine kleine Bewegungsdistanz D eine erste (geringe) Geschwindigkeit, mit der die Kreis- und/oder Schwenkbewegung durchgeführt wird, und eine größere Bewegungsdistanz D als die kleine Bewegungsdistanz D bewirkt eine höhere Geschwindigkeit als bei der kleinen Bewegungsdistanz D. Beispielsweise kann die Geschwindigkeit basierend auf dem Produkt der Bewegungsdistanz D mit einem festgelegten Faktor oder durch einen von dem Bediener festlegbaren Faktor berechnet werden.

Die Steuereinheit 46 kann die Bewegungsrichtung R des Berührungspunkts P insbesondere dadurch ermitteln, in dem eine Richtung vom Mittelpunkt des zentralen Bereiches 44 oder vom Mittelpunkt des Bildausgabebereichs 42 zu dem Berührungspunkt P' zum Ende der berührungsbasierten Eingabe E berechnet wird. Aus der Bewegungsrichtung R kann die Steuereinheit 46 eine entsprechende Ausrichtungsanweisung zum Ausrichten des Kreis- und Schwenkkopfs 24 bzw. der Bilderfassungseinrichtung 26 bestimmen. Entsprechend kann der Kreis-Schwenkkopf 24 und/oder die Bilderfassungseinrichtung 26 entsprechend der Ausrichtungsanweisung und/oder der Geschwindigkeit ausgerichtet werden. Die Ausrichtungsanweisung und/oder die Geschwindigkeit können insbesondere Bestandteil des Steuerbefehls sein, den die Steuereinheit 46 an den Kreis- und Schwenkkopf 24 sendet bzw. übermittelt. Die Ausrichtung des Kreis- und Schwenkkopfs 24 kann dabei bis zu einer vorgebbaren Endposition erfolgen. Ferner kann durch eine weitere berührungsbasierte Eingabe des Bildausgabebereichs 44 während des Ausrichtens des Kreis- und Schwenkkopfs 24, beispielsweise eine Berührung des Bedieners innerhalb des zentralen Bereichs 44, die Steuereinheit 46 das Ausrichten des Kreis- und Schwenkkopfs 24 stoppen.

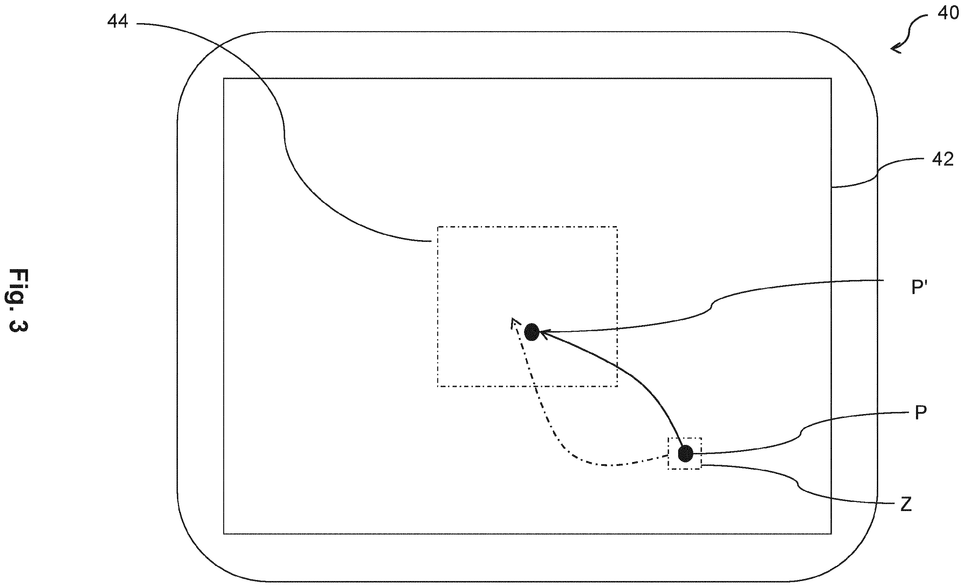

Im Folgenden wird bezugnehmend auf Figur 3 die Steuerung des Kreis- und Schwenkkopfs 24 mittels einer berührungsbasierten Eingabe E, die zu dem zentralen Bereich 44 des Bildausgabebereichs 42 führt, beschrieben. Die berührungsbasierte Eingabe E ist dadurch gekennzeichnet, dass zu Beginn der berührungsbasierten Eingabe E, ein Berührungspunkt P außerhalb des zentralen Bereichs 44 liegt und der Berührungspunkt P durch die berührungsbasierte Eingabe E bevorzugt ununterbrochen in den zentralen Bereich 42 bewegt wird. Mit anderen Worten, die berührungsbasierte Eingabe beginnt außerhalb des zentralen Bereichs 44 und endet mit dem Berührungspunkt P' innerhalb des zentralen Bereichs 44. Des Weiteren kann die berührungsbasierte Eingabe E im Wesentlichen geradlinig ausgeführt sein, wobei eine Abweichung D, wie bereits zuvor beschrieben, möglich sein kann.

Vorzugsweise kann die Steuereinheit 46 dazu ausgebildet sein, für die zu dem zentralen Bereich 44 des Bildausgabebereichs 42 führende Eingabe E, eine Ausrichtungsanweisung des Steuerbefehls, die eine Anweisung zum Ausrichten des Kreis- und Schwenkkopfs 24 vorgibt, basierend auf dem Berührungspunkt P zu Beginn der berührungsbasierten Eingabe E zu bestimmen. Insbesondere kann die Ausrichtungsanweisung eine Ausrichtung des Kreis- und Schwenkkopfs 24 auf den Bildausschnitt Z bewirken, der mit dem Berührungspunkt P zu Beginn der berührungsbasierten Eingabe assoziiert ist. Mit anderen Worten, bei der die zu dem zentralen Bereich 44 des Bildausgabebereichs 42 führenden Eingabe erfolgt eine Ausrichtung der Bilderfassungseinrichtung 26 auf den Bildausschnitt Z, der mit dem Berührungspunkt P zu Beginn der berührungsbasierten Eingabe assoziiert ist. Durch die Kreis- und/oder Schwenkbewegung erfolgt somit eine Ausrichtung der Bilderfassungseinrichtung 26 derart, dass der Bildausschnitt Z, der mit dem Berührungspunkt P zu Beginn der berührungsbasierten Eingabe assoziiert ist, in dem Bildausgabebereich 44 und/oder dem zentralen Bereich 44 zentriert dargestellt wird.

Vorzugsweise kann die Steuereinheit 46 dazu ausgelegt sein, für die zu dem zentralen Bereich 44 des Bildausgabebereichs 42 führende Eingabe E, die Ausrichtungsanweisung basierend auf mindestens einem von einem Blick- bzw. Bildwinkel 27 der Bilderfassungseinrichtung 26, einer Zoomeinstellung der Bilderfassungseinrichtung 26 und einer Positionierung des Bildausschnitts Z in Bezug auf den Bildausgabebereich zu bestimmen. Insbesondere kann die Steuereinheit 46 dazu ausgebildet sein, den Blick- bzw. Bildwinkel 27 der Bilderfassungseinrichtung 26 zu bestimmen. Zur Bestimmung des Blick- bzw. Bildwinkels 27 kann die Steuereinheit 46 den Typ der Bilderfassungseinrichtung 26 bestimmen und basierend auf dem Typ der Bilderfassungseinrichtung 26, den Blickwinkel 27 der Bilderfassungseinrichtung 26 bestimmen. Vorzugsweise können ein oder mehrere Typen von Bilderfassungseinrichtungen 26 mit zugeordneten Blick- bzw. Bildwinkeln 27 in der Steuereinheit 46 gespeichert sein, und die Steuereinheit 46 kann die Bilderfassungseinrichtung 26 nach deren Typ abfragen, um den dem Typ zugordneten Blick- bzw. Bildwinkel 27 der Bilderfassungseinrichtung 26 zu bestimmen. Alternativ kann die Steuereinheit 46 den Blick- bzw. Bildwinkel 27 direkt von der Bilderfassungseinrichtung 26 abfragen.

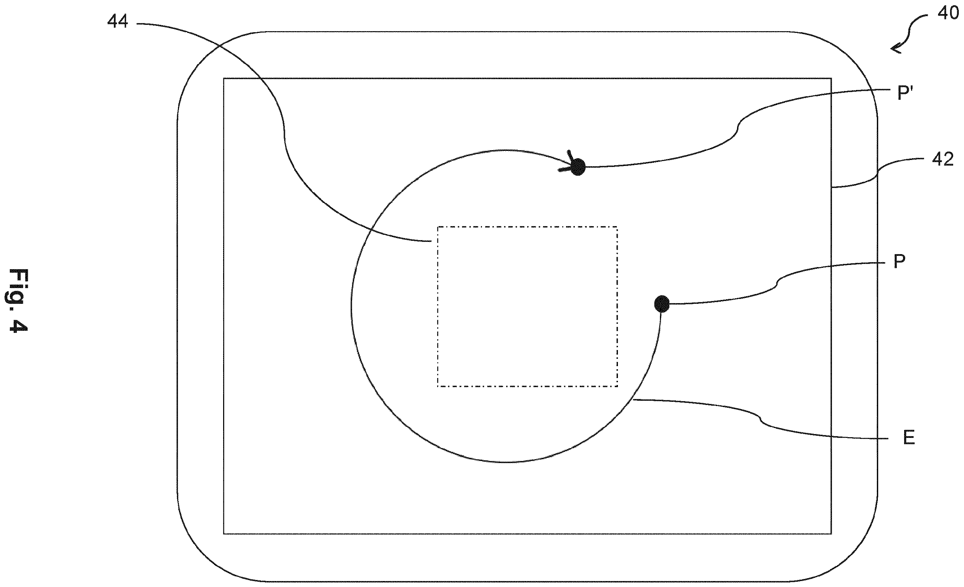

Ferner sind weitere Eingabecharakteristiken möglich. Bezugnehmend auf Figur 4 kann eine berührungsbasierte Eingabe E dahingehend charakterisiert sein, dass ein Berührungspunkt P im Wesentlichen zumindest abschnittsweise eine Kreisbewegung erfährt und der Steuerbefehl eine Anweisung für eine vordefinierte Kreis und/oder Schwenkbewegung des Kreis- und Schwenkkopfs 24 enthält. Unter einer abschnittsweisen Kreisbewegung kann insbesondere eine Kreisbewegung verstanden werden, die mindestens 270° eines Kreises darstellt. Die vordefinierte Kreis- und/oder Schwenkbewegung kann insbesondere ein 360° Kreisbewegung des Kreis- und Schwenkkopfs 24 bewirken, bei der die Bilderfassungseinrichtung 26 in 90° von der ersten Achse A wegblickt.

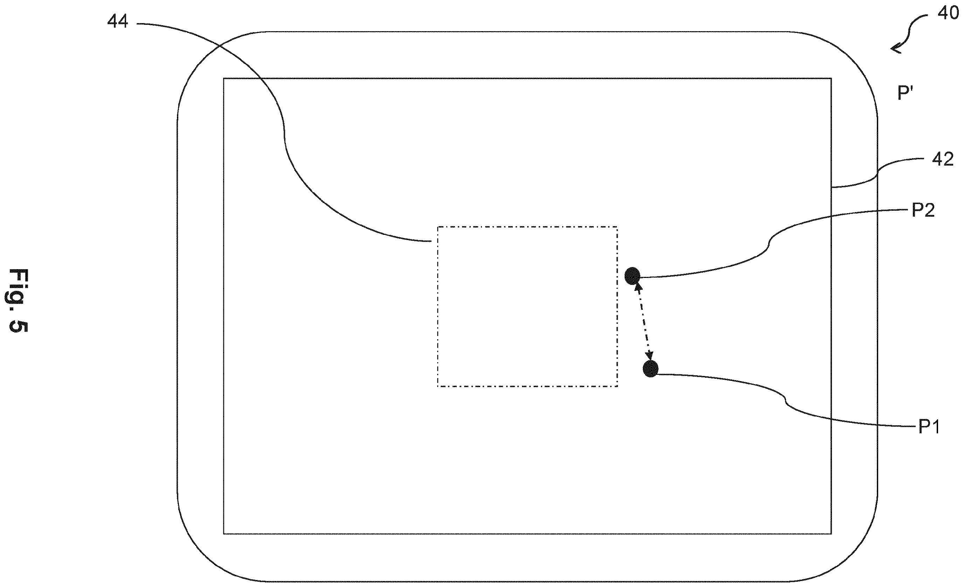

Bezugnehmend auf Figur 5 kann die berührungsbasierte Eingabe dahingehend charakterisiert sein, dass zwei Berührungspunkte P1 und P2 voneinander weg oder zueinander bewegt werden und der Steuerbefehl eine Zoomanweisung für die Bilderfassungseinrichtung 26 enthält. Insbesondere können die zwei Berührungspunkte P1 und P2 gleichzeitig voneinander weg oder aufeinander zu bewegt werden. Anhand der berührungsbasierten Eingabe kann ein Weg- oder Heranzoomen der Bilderfassungseinrichtung 26 gesteuert werden. Ferner kann das Maß des Weg- oder Heranzoomens basierend auf einer Strecke, um die sich die zwei Berührungspunkte P 1 und P2 voneinander weg oder aufeinander zu bewegen, gesteuert werden.

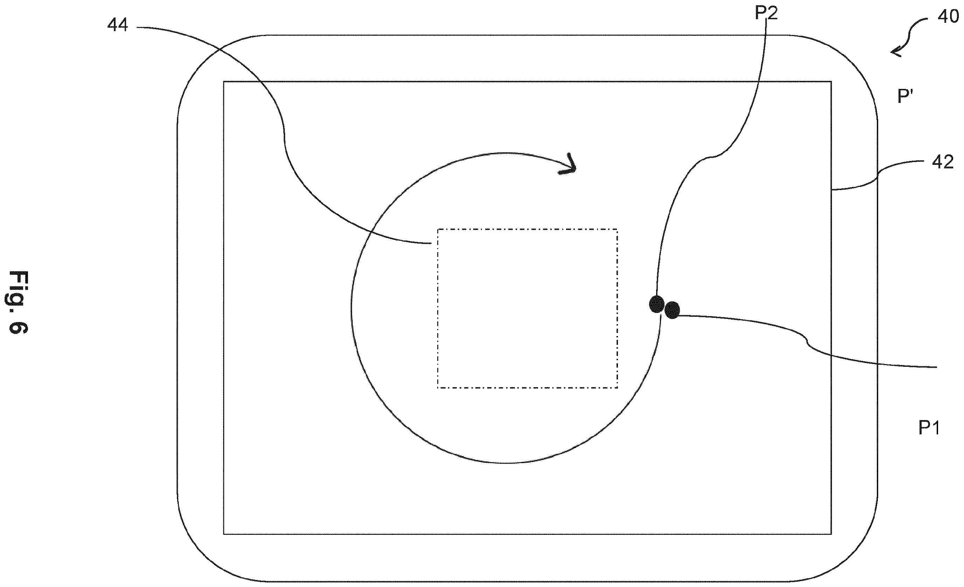

Bezugnehmend auf Figur 6 kann die vorbestimmte Eingabecharakteristik die berührungsbasierte Eingabe E dahingehend charakterisieren, dass zwei Berührungspunkte P1 und P2 eine gerichtete Drehbewegung erfahren und der Steuerbefehl eine der gerichteten Drehbewegung entsprechende Anweisung zum Kreisen des Kreis- und Schwenkkopfs 24 enthält. Insbesondere kann die Anweisung lediglich eine Richtungsanweisung zum Kreisen des Kreis -und Schwenkkopfs 24 beinhalten, die der gerichteten Drehbewegung entspricht.

Bezugnehmend auf Figur 7, wird die Bedieneinheit 40 näher erläutert. Die Bedieneinheit 40 weist den Bildausgabebereich 42 und die Steuereinheit 46 auf. Ferner kann die Bedieneinheit 40 und/oder die Steuereinheit 46 einen oder mehrere Prozessoren 47, einen nichtflüchtigen Speicher 48 und einen flüchtigen Speicher 49 aufweisen. Der eine oder die mehreren Prozessoren 47 können Anweisungen, die in dem nichtflüchtigen Speicher 48 gespeichert sind, laden und ausführen. Die Anweisungen können insbesondere Anweisungen umfassen, um die hierin beschriebene Steuerung des Kreis- und Schwenkkopfs 24 und/oder der Bilderfassungseinrichtung 26 zu ermöglichen. Ferner kann die Bedieneinheit 40 ein Kommunikationsmodul 45 aufweisen, welches es der Steuereinheit 46 und/oder der Bedieneinheit 40 ermöglicht mit der Anordnung 20 zu kommunizieren. Die Kommunikation kann dabei drahtgebunden oder drahtlos, beispielsweise mittels WLAN oder Mobilfunk, erfolgen.

### Bezugszeichenliste

- 10: Rohr und/oder Kanalleitung
- 20: Anordnung
- 22: Gehäuse
- 23: Antrieb
- 24: Kreis- und Schwenkkopf
- 26: Bilderfassungseinrichtung
- 27: Blick- bzw. Bildwinkel
- 30: erster Abschnitt
- 40: Bedieneinheit
- 42: Bildausgabebereich
- 44: zentraler Bereich
- 45: Kommuniktationsmodul
- 46: Steuereinheit
- 47: ein oder mehrere Prozessoren
- 48: nichtflüchtiger Speicher
- 49: flüchtiger Speicher
- A: erste Achse
- B: zweite Achse
- D: Bewegungsdistanz
- E: Eingabe
- L1: erste Länge Bildausgabebereich
- L2: zweite Länge Bildausgabebereich
- R: Bewegungsrichtung
- R1: erste Richtung
- R2: zweite Richtung
- P/P'/P1/P2: Berührungspunkt
- Z: Bildausschnitt

## Patentansprüche

1. Bedienvorrichtung (40) zur Steuerung eines Kreis- und Schwenkkopfs (24) mit einer durch den Kreis- und Schwenkkopf (24) gehaltenen Bilderfassungseinrichtung (26), wobei der Kreis- und Schwenkkopf (24) an einer Anordnung (20) zur Inspektion einer Rohr- und/oder Kanalleitung (10) vorgesehen ist, wobei die Bedienvorrichtung (40) aufweist:
- eine Ausgabeeinheit, die einen berührungsempfindlichen Bildausgabebereich (42) aufweist, der dazu ausgelegt ist, einem Bediener ein von der Bilderfassungseinrichtung (26) erfasstes Bild auszugeben; und
- eine Steuereinheit (46), die ausgelegt ist:
- eine berührungsbasierte Eingabe (E) des Bedieners in dem Bildausgabebereich (42) zu detektieren,
- zu bestimmen, dass die berührungsbasierte Eingabe (E) eine vorbestimmte Eingabecharakteristik aufweist,
- wenn die berührungsbasierte Eingabe (E) die vorbestimmte Eingabecharakteristik aufweist, basierend auf der berührungsbasierten Eingabe (E), einen Steuerbefehl für den Kreis- und Schwenkkopf (24) und/oder die Bilderfassungseinrichtung (26) zu bestimmen, und
- basierend auf dem Steuerbefehl, den Kreis- und Schwenkkopf (24) und/oder die Bilderfassungseinrichtung (26) zu steuern.

2. Bedienvorrichtung (40) nach Anspruch 1, wobei die berührungsbasierte Eingabe (E) in einem Teilbereich des Bildausgabebereichs (42) erfolgt, in dem kein durch den Bediener zu betätigendes Bedienelement dargestellt ist oder
wobei die berührungsbasierte Eingabe (E) kein in dem Bildausgabebereich (42) dargestelltes Betätigungselement betätigt.

3. Bedienvorrichtung (40) nach Anspruch 1 oder 2, wobei die vorbestimmte Eingabecharakteristik die berührungsbasierte Eingabe (E) dahingehend charakterisiert, dass die berührungsbasierte Eingabe (E) eine von einem zentralen Bereich (44) des Bildausgabebereichs (42) ausgehende Eingabe ist und/oder wobei die vorbestimmte Eingabecharakteristik die berührungsbasierte Eingabe (E) dahingehend charakterisiert, dass die berührungsbasierte Eingabe (E) eine zu dem zentralen Bereich (44) des Bildausgabebereichs (42) führende Eingabe ist.

4. Bedienvorrichtung (40) nach Anspruch 3, wobei die von dem zentralen Bereich (44) des Bildausgabebereichs (42) ausgehende Eingabe **dadurch gekennzeichnet ist, dass** zu Beginn der berührungsbasierten Eingabe (E), ein Berührungspunkt (P) innerhalb des zentralen Bereichs (44) liegt und der Berührungspunkt (P) während der berührungsbasierten Eingabe (E) vorzugsweise mit einer im Wesentlichen geradlinigen Bewegung um eine Bewegungsdistanz (D) aus dem zentralen Bereich (44) bewegt wird.

5. Bedienvorrichtung (40) nach Anspruch 4, wobei die Steuereinheit (46) dazu ausgebildet ist, eine Geschwindigkeitsanweisung des Steuerbefehls, die eine Geschwindigkeit zum Durchführen einer Kreis- und/oder Schwenkbewegung des Kreis- und Schwenkkopfs (24) vorgibt, basierend auf der Bewegungsdistanz (D) zu bestimmen und/oder eine Ausrichtungsanweisung des Steuerbefehls, die eine Anweisung zum Ausrichten des Kreis- und Schwenkkopfs (24) vorgibt, basierend auf einer Bewegungsrichtung (R) des Berührungspunkts (P) zu bestimmen.

6. Bedienvorrichtung (40) nach einem der Ansprüche 3 bis 5, wobei die zu dem zentralen Bereich (44) des Bildausgabebereichs (42) führende Eingabe **dadurch gekennzeichnet ist, dass** zu Beginn der berührungsbasierten Eingabe (E), ein Berührungspunkt (P) außerhalb des zentralen Bereichs (44) liegt und der Berührungspunkt (P) durch die berührungsbasierte Eingabe (E) in den zentralen Bereich (44) bewegt wird.

7. Bedienvorrichtung (40) nach Anspruch 6, wobei die Steuereinheit (46) dazu ausgebildet ist, für die zu dem zentralen Bereich (44) des Bildausgabebereichs (42) führende Eingabe, eine Ausrichtungsanweisung des Steuerbefehls, die eine Anweisung zum Ausrichten des Kreis- und Schwenkkopfs (24) vorgibt, basierend auf dem Berührungspunkt (P) zu Beginn der berührungsbasierten Eingabe (E) zu bestimmen.

8. Bedienvorrichtung (40) nach Anspruch 7, wobei die Ausrichtungsanweisung eine Ausrichtung des Kreis- und Schwenkkopfs (24) auf den Bildausschnitt (Z) bewirkt, der mit dem Berührungspunkt (P) zu Beginn der berührungsbasierten Eingabe (E) assoziiert ist.

9. Bedienvorrichtung (40) nach Anspruch 8, wobei die Steuereinheit (46) dazu ausgelegt ist, die Ausrichtungsanweisung basierend auf mindestens einem von einem Blickwinkel (27) der Bilderfassungseinrichtung (26), einer Zoomeinstellung der Bilderfassungseinrichtung (26) und einer Positionierung des Bildausschnitts (Z) in Bezug auf den Bildausgabebereich (42) zu bestimmen.

10. Bedienvorrichtung (40) nach Anspruch 1 oder 2, wobei die vorbestimmte Eingabecharakteristik die berührungsbasierte Eingabe (E) dahingehend charakterisiert, dass ein Berührungspunkt (P) im Wesentlichen zumindest abschnittsweise eine Kreisbewegung erfährt und der Steuerbefehl eine Anweisung für eine vordefinierte Kreis und/oder Schwenkbewegung des Kreis- und Schwenkkopfs (24) enthält,
wobei die vorbestimmte Eingabecharakteristik die berührungsbasierte Eingabe (E) dahingehend charakterisiert, dass zwei Berührungspunkte (P1, P2) voneinander weg oder zueinander bewegt werden und der Steuerbefehl eine Zoomanweisung für die Bilderfassungseinrichtung (26) enthält, und/oder
wobei die vorbestimmte Eingabecharakteristik die berührungsbasierte Eingabe (E) dahingehend charakterisiert, dass zwei Berührungspunkte (P1, P2) eine gerichtete Drehbewegung erfahren und der Steuerbefehl eine der gerichteten Drehbewegung entsprechende Anweisung zum Kreisen des Kreis- und Schwenkkopfs (24) enthält.

11. Bedienvorrichtung (40) nach einem der vorangegangenen Ansprüche, wobei die Steuereinheit (46) dazu ausgebildet ist, den Typ der Bilderfassungseinrichtung (26) zu bestimmen und basierend auf dem Typ der Bilderfassungseinrichtung (26), den Blickwinkel (27) der Bilderfassungseinrichtung (26) zu bestimmen.

12. System zur Inspektion einer Rohr- und/oder Kanalleitung (10), aufweisend:
- eine Anordnung (20) aufweisend ein Gehäuse (22) mit einer von einem Kreis- und Schwenkkopf (24) gehaltenen Bilderfassungseinrichtung (26), wobei die Anordnung (20) durch die Rohr- und/oder Kanalleitung (10) bewegbar ist, und
- eine mit dem Gehäuse (22) kommunikativ verbindbare Bedienvorrichtung (40) nach einem der Ansprüche 1 bis 11.

13. System nach Anspruch 12, wobei das Gehäuse (22) und die Bedienvorrichtung (40) mittels einer elektrischen Verbindung und/oder über eine Luftschnittstelle kommunikativ miteinander verbunden sind.

14. Computerimplementiertes Steuerungsverfahren zur Steuerung eines Kreis- und Schwenkkopfs (24) mit einer durch den Kreis- und Schwenkkopf (24) gehaltenen Bilderfassungseinrichtung (26), wobei der Kreis- und Schwenkkopf (24) an einer Anordnung (20) zur Inspektion einer Rohr- und/oder Kanalleitung (10) vorgesehen ist, wobei das Verfahren die folgenden Schritte aufweist:
- Ausgeben eines von der Bilderfassungseinrichtung (26) erfassten Bildes auf einem berührungsempfindlichen Bildausgabebereich (42) einer Ausgabeeinheit,
- Detektieren einer berührungsbasierten Eingabe (E) eines Bedieners in dem Bildausgabebereich (42),
- Bestimmen, dass die berührungsbasierte Eingabe (E) eine vorbestimmte Eingabecharakteristik aufweist,
- wenn die berührungsbasierte Eingabe (E) die vorbestimmte Eingabecharakteristik aufweist, Bestimmen eines Steuerbefehls für den Kreis- und Schwenkkopf (24) und/oder für die Bilderfassungseinrichtung (26) basierend auf der berührungsbasierten Eingabe (E), und
- Steuern des Kreis- und Schwenkkopfs (24) und/oder der Bilderfassungseinrichtung (26) basierend auf dem Steuerbefehl.

15. Computerlesbares Medium, aufweisend Befehle, die bei der Ausführung durch eine Bedienvorrichtung (40) diese veranlassen, die Schritte des Verfahrens nach Anspruch 14 auszuführen.
